# EUROPEAN PATENT SPECIFICATION

(11) **EP 4 577 872 B1**
(45) Date of publication and mention of the grant of the patent: **05.08.2026**
(21) Application number: 22768410.7
(22) Date of filing: 23.08.2022
(51) Int. Cl.: G02C 7/04, G02C 11/00

(54) **CONTACT LENS**
KONTAKTLINSE
LENTILLE DE CONTACT

(43) Date of publication of application: 02.07.2025
(73) Proprietor: Telefonaktiebolaget LM Ericsson (publ), 164 83 Stockholm (SE)
(72) Inventor: LINDSKOG, Niklas, 224 72 LUND (SE); ÖKVIST, Peter, 973 41 LULEÅ (SE); HUNT, Alexander, 218 72 TYGELSJÖ (SE); EK, Martin, 22350 Lund (SE); ARNGREN, Tommy, 954 42 SÖDRA SUNDERBYN (SE); KRISTENSSON, Andreas, 247 35 SÖDRA SANDBY (SE)
(74) Representative: Ericsson
(86) International application number: PCT/EP2022/073389
(87) International publication number: WO 2024/041725

(56) References cited:
- US-A1- 2014 085 083
- US-A1- 2015 281 411
- US-A1- 2018 211 020
- US-A1- 2019 290 192
- US-A1- 2020 029 208
- SHRESTHA PRAKASH PRAKASHS@UAB EDU ET AL: "An Offensive and Defensive Exposition of Wearable Computing", ACM COMPUTING SURVEYS, ACM, NEW YORK, NY, US, US, vol. 50, no. 6, 22 November 2017 (2017-11-22), pages 1 - 39, XP058666338, ISSN: 0360-0300, DOI: 10.1145/3133837

## Description

### Technical field

The invention relates to a contact lens, a method performed by a contact lens, a corresponding computer program, a corresponding computer-readable data carrier, and a corresponding data carrier signal.

### Background

Contact lenses, or simply contacts, are thin lenses placed directly on the surface of the eyes. Contact lenses are ocular prosthetic devices which can be worn to correct vision, or for cosmetic or therapeutic reasons.

Contact lenses may also be provided with sensors and electronics for health monitoring, e.g., for measuring blood oxygen levels and/or or pulse rates (see, e.g., US 8,909,311 B2). Recently, Mojo Vision and InWith Corporation have developed contact lenses with the ability to visibly deliver real-time information to the eye of the person wearing the contact lens, by using built-in display (see, e.g., https://www.mojo.vision/mojo-lens, captured on 19 August 2022, https://www.cnet.com/science/inwith-promises-worlds-first-smart-contact-lens/, captured on 19 August 2022). Such contact lenses are commonly referred to as smart contact lenses.

An issue which arises with different types of advanced contact lenses, including contact lenses for health monitoring, contact lenses comprising displays, and contact lenses for adaptive vision correction, is that they may store sensitive information such as measured blood oxygen levels or pulse rates, prescription information, or the like. If the user of such a contact lens displaces or loses his/her contact lens, sensitive information may become accessible to adversaries which may access the information which is stored on a lost or displaced contact lens.

### Summary

It is an object of the invention to provide an improved alternative to the above techniques and prior art.

More specifically, it is an object of the invention to provide an improved solution for protecting information which is stored on contact lenses, in particular potentially private or sensitive information which is stored on contact lenses for health monitoring, contact lenses comprising displays, and contact lenses for adaptive vision correction.

These and other objects of the invention are achieved by means of different aspects of the invention, as defined by the independent claim. Embodiments of the invention are characterized by the dependent claims.

The invention makes use of an understanding that potentially private and/or sensitive information which is stored on a contact lens may risk dissemination if the contact lens is lost or displaced by its user. In order to prevent adversaries from gaining access to the stored information, the stored information is protected against unauthorized access.

Even though advantages of the invention have in some cases been described with reference to embodiments of the first aspect of the invention, corresponding reasoning applies to embodiments of other aspects of the invention.

Further objectives of, features of, and advantages with, the invention will become apparent when studying the following detailed disclosure, the drawings and the appended claims. Those skilled in the art realize that different features of the invention can be combined to create embodiments other than those described in the following.

### Brief description of the drawings

The above, as well as additional objects, features and advantages of the invention, will be better understood through the following illustrative and non-limiting detailed description of embodiments of the invention, with reference to the appended drawings, in which:
Fig. 1 schematically illustrates a contact lens, in accordance with embodiments of the invention.
Fig. 2 schematically illustrates embodiments of the processing circuitry comprised in the contact lens.
Fig. 3 illustrates the contact lens stored in a trusted environment (left) and the contact lens in communication with a trusted communications device (right).
Fig. 4 shows a method performed by a contact lens, in accordance with embodiments of the invention.

All the figures are schematic, not necessarily to scale, and generally only show parts which are necessary in order to elucidate the invention, wherein other parts may be omitted or merely suggested.

### Detailed description

The invention will now be described more fully herein after with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete.

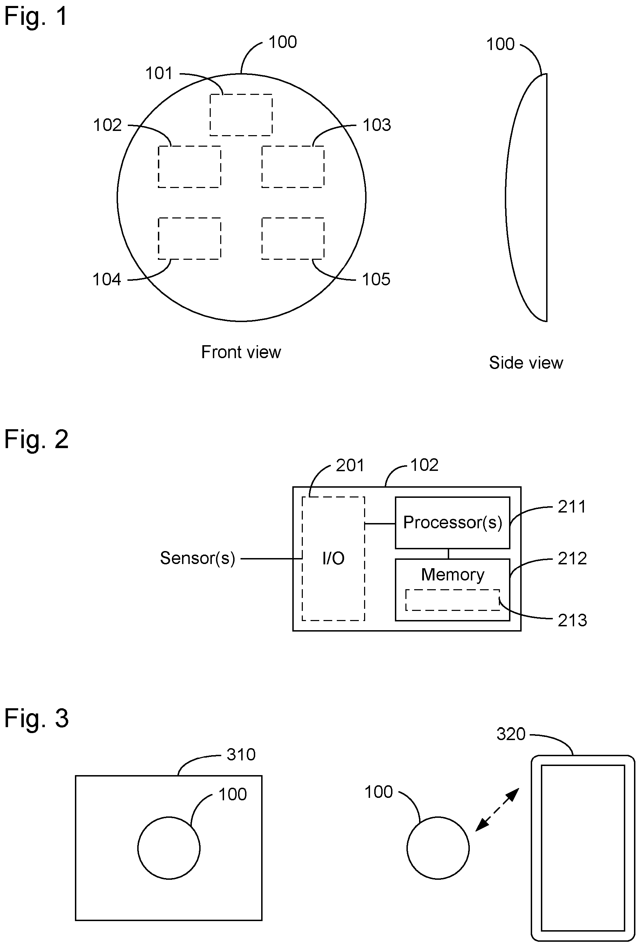

Fig. 1 illustrates a contact lens 100 in accordance with embodiments of the invention. The contact lens 100 may be a soft or a rigid (commonly referred to as hard) contact lens. The contact lens 100 comprises at least one sensor 101 which is operative to capture sensor data. The captured sensor data is indicative of a transition of the contact lens 100 between an on-eye state and an off-eye state. In the on-eye state, the contact lens 100 is attached to a human eye, in particular an eye of the user or wearer of the contact lens 100, i.e., the contact lens 100 is placed on the surface of the human eye. Correspondingly, in the off-eye state, the contact lens 100 is not attached to a human eye.

The contact lens 100 further comprises processing circuitry 102. The processing circuitry 102, which is schematically illustrated in Fig. 2, may comprise one or more processors 211, such as Central Processing Units (CPUs), microprocessors, application processors, application-specific processors, Graphics Processing Units (GPUs), and Digital Signal Processors (DSPs) including image processors, or a combination thereof, and a memory 212 comprising a computer program 213 comprising instructions. When executed by the processor(s) 211, the instructions cause the contact lens 100 to become operative in accordance with embodiments of the invention described herein. The memory 212 may, e.g., be a Random-Access Memory (RAM), a Read-Only Memory (ROM), a Flash memory, or the like. The computer program 213 may be downloaded to the memory 212 by means of a wireless-interface circuitry 103, as a data carrier signal carrying the computer program 213. The wireless-interface circuitry 103 may comprise one or more of a Bluetooth modem, a Near-Field Communication (NFC) circuitry, a ZigBee circuitry, an optical interface, or the like, for receiving and/or transmitting data between the contact lens 100 and one or more communications devices, e.g., a smartphone 320 of the user of the contact lens 100. The processing circuitry 102 may alternatively or additionally comprise one or more Application-Specific Integrated Circuits (ASICs), Field-Programmable Gate Arrays (FPGAs), or the like, which are operative to cause the contact lens 100 to become operative in accordance with embodiments of the invention described herein.

The processing circuitry 102 may further comprise one or more interface circuitries 201 ("I/O" in Fig. 2) for communicating with the at least one sensor 101, the wireless-interface circuitry 103, and optionally other circuitry comprised in the contact lens 100.

More specifically, the processing circuitry 102 causes the contact lens 100 to become operative to store information pertaining to a user of the contact lens. Throughout the present disclosure, the user of the contact lens 100 is understood to be the person wearing the contact lens 100 in his/her eye. The stored information is typically user-specific information or data. In particular, the stored information may be private and/or sensitive information, e.g., medical information (related to the eyesight of the user, blood oxygen levels, pulse rates, or other health-related information), biometric information (e.g., patterns or images for iris recognition), user credentials, authentication information, images or information for display on a built-in display, configuration information, etc.

The contact lens 100 is further operative to detect a transition of the contact lens 100 from the on-eye state to the off-eye state. In other words, the contact lens 100 is no longer attached to the eye but becomes detached. This may be the case if the user of the contact lens 100 has (intentionally) removed the contact lens 100 from his/her eye, or the contact lens 100 has inadvertently become detached from the eye of the user, i.e., it has been lost. The transition of the contact lens 100 from the on-eye state to the off-eye state is detected based on sensor data captured by the at least one sensor 101, as is described in further detail below.

The contact lens 100 is further operative to protect the stored information against unauthorized access. More specifically, the stored information is protected against unauthorized access in response to detecting the transition of the contact lens 100 from the on-eye state to the off-eye state. Thereby, the risk of disseminating the information which is stored on the contact lens 100 is mitigated or at least reduced.

According to the claimed invention, the contact lens 100 is further operative to start a timer in response to detecting the transition from the on-eye state to the off-eye state, and protect the stored information against unauthorized access after expiry of the timer. Thereby, the user of the contact lens 100 is given the opportunity to put the contact lens 100 back into his/her eye before the information is protected against unauthorized access. The timer may be configured with a duration sufficiently long to allow the user who has lost his/her contact lens 100 to locate the contact lens 100 and return it to his/her eye. It will be appreciated that the duration of the timer should not be too long, to reduce the risk that an adversary discovers the lost contact lens 100 and gains access to the information stored on the contact lens 100. For instance, the duration of the timer may be set to a duration between 30 seconds and a few minutes. It may also be envisaged that the duration of the timer may be set to a duration which is dependent on one or more of a time of day, a location or position, whether the contact lens 100 is located indoor or outdoor, or the like.

Preferably, the contact lens 100 is further operative to stop the timer in response to detecting any one of: a transition of the contact lens 100 from the off-eye state to the on-eye state, proximity of a trusted environment, and communications between the contact lens 100 and a trusted communications device. Stopping the timer before it has expired means that the stored information is not protected against unauthorized access.

A transition of the contact lens 100 from the off-eye state to the on-eye state in practice means that the contact lens 100 is again attached to a human eye. Optionally, the timer is only stopped if the contact lens 100 has identified the eye as an eye of its user, or the eye to which the contact lens 100 was attached before it became detached from the eye. This may, e.g., be achieved by providing the contact lens 100 with iris scanning capabilities for biometric identification of the eye, as is, e.g., disclosed in US 8,798,332 B2.

The trusted environment may, e.g., be a lens case 310 in which the contact lens 100 is stored when not in use, as is illustrated in Fig. 3. Lens cases are commonly used for storing contact lenses while not in use, e.g., during night. Detecting proximity of a trusted environment, such as the lens case 310, may, e.g., be based on the contact lens detecting (using its wireless-interface circuitry 103) a radio signal transmitted or broadcasted by the lens case 310, e.g., via NFC. Alternatively, the lens case 310 may be provided with a QR code or other preferably unique visible pattern which can be captured by a camera comprised in the contact lens 100. As a further alternative, the contact lens 100 may detect visible or infrared coded light emitted on the inside of the lens case 310, either by means of an optical sensor which may be part of the wireless-interface circuitry 103, or a camera which the contact lens 100 is provided with. In the present context, proximity of the contact lens 100 to a trusted environment, such as the lens case 310, when not attached to the user's eye is considered to be an indication that the contact lens 100 is under control of its user, and protecting the stored information against unauthorized access is no longer required.

The trusted communications device may, e.g., be a smartphone 320 or any other computing or communications device of the user. By placing the contact lens 100 in proximity of a trusted communications device, such as the smartphone 320, wireless communications may commence between the contact lens 100 (via its wireless-interface circuitry 103) and a corresponding wireless interface of the smartphone 320. In practice, this may be used for updating a configuration and/or software of the contact lens 100, for providing information to the contact lens 100 for display to the user on a built-in display of the contact lens 100, or for retrieving and/or transmitting medical or health-related information from/to the contact lens 100, such as measured blood oxygen levels or pulse rates, or eye prescription data. The established wireless communications may also be used for restoring information which has been erased as part of protecting the stored information against unauthorized access, restoring tokens or credentials needed for accessing the memory where the information is stored, or the like, as is described in further detail below. The trusted communications device may also be embodied as the lens case 320, which may serve as a gateway or intermediate node for establishing wireless communications with the contact lens 100, e.g., if the smartphone of the user is not equipped with a wireless interface which is compatible for communicating with the wireless-interface circuitry 103 of the contact lens 100.

In the following, different alternatives for protecting the stored information against unauthorized access are described in more detail. In the present context, stored information is understood to be potentially private and/or sensitive information which is stored in a data storage, such as the memory 212 or any separate memory, comprised in the contact lens 100.

For instance, the contact lens 100 may be operative to protect the stored information against unauthorized access by erasing the stored information. As an example, if the information is stored in a volatile memory, the memory, or parts thereof, storing the information may be powered off for a short period of time which is sufficient to erase the memory. Alternatively, in particular if the memory is of a non-volatile type, the parts of the memory where the information is stored may be overwritten.

As another example, the contact lens 100 may be operative to protect the stored information against unauthorized access by encrypting the stored information. While being attached to the eye of its user, i.e., while in the on-eye state, there is no need to continually encrypt and decrypt information while accessing the stored information (either for reading or writing), as this consumes power and processing resources which typically are scarce in (smart) contact lenses. Rather, the stored information is only encrypted if the contact lens 100 leaves its on-eye state.

As a further example, the contact lens 100 may be operative to protect the stored information against unauthorized access by resetting a memory in which the information is stored, such as the memory 212 or any separate memory, to a default state. In practice, this may correspond to a factory reset, i.e., the configuration of the contact lens 100 is restored to its factory state before it was configured for a specific user and/or user-specific information or data, such as eye prescription information, has been stored on the contact lens 100. Resetting the memory to its default state may include erasing information stored in the memory 212, as well as resetting configuration information to a default state.

As a further example, the contact lens 100 may be operative to protect the stored information against unauthorized access by restricting access to a memory in which the information is stored, such as the memory 212 or any separate memory, or parts thereof. For instance, if the information is stored in the memory 212, the memory controller (which may be part of the memory 212 or separate) may require a token or credential in order to grant access to the memory 212, or parts thereof, where the information is stored, e.g., a protected region of the memory 212. In practice, the stored information may be protected by erasing the token or credential.

As a further example, the contact lens 100 may be operative to protect the stored information against unauthorized access in response to detecting that a remaining energy of a power source 104 comprised in the contact lens is less than a threshold value. The power source 104 may, e.g., be a battery or a capacitor, and may alternatively or additionally be based on harvesting energy from motion, light, or radio-frequency radiation. Alternatively, the power source 104 may also be a tear-based aqueous battery (see, e.g., "Tear-Based Aqueous Batteries for Smart Contact Lenses Enabled by Prussian Blue Analogue Nanocomposites", by J. Yun et al., Nano Lett., vol. 21, pages 1659-1665, American chemical Society, 2021, https://doi.org/10.1021/acs.nanolett.0c04362). The threshold value may be equal to, or larger than, an amount of energy which is required for protecting the stored information against unauthorized access. That is, the threshold value is configured such that the remaining energy is sufficient to perform one or more of the measures for protecting the stored information against unauthorized access described hereinbefore. Thereby, the stored information is protected against unauthorized access even in situations when the built-in power source 104 is depleted to a level of remaining energy which is not sufficient to protect the stored information when the contact lens 100 is lost (i.e., becomes detached from the eye).

The contact lens 100 may further comprise a visual indicator 105, and the contact lens 100 may further be operative to activate the visual indicator 105 in response to detecting the transition from the on-eye state to the off-eye state. The visual indicator 105 may, e.g., be a Light-Emitting Diode (LED) or a display, which can be activated in response to detecting the transition from the on-eye state to the off-eye state. Thereby, the user can be notified that protecting of the stored information is imminent, potentially erasing the information stored on the contact lens 100. The visual indicator 105, such as a blinking light, may also facilitate locating the contact lens 100 by the user, e.g., if the contact lens 100 has fallen to the floor. Optionally, the contact lens 100 may be operative to inactivate, disable, or switch off, the visual indicator 105 in response to detecting any one of: a transition of the contact lens from the off-eye state to the on-eye state, proximity of a trusted environment (such as the lens case 310), and communications between the contact lens and a trusted communications device (such as the user's smartphone 320), similar to what has been described hereinbefore. Preferably, the contact lens 100 may be operative to inactivate the visual indicator 105 only after it has identified the eye as an eye of its user, or the eye to which the contact lens 100 was attached before it became detached from the eye. This may, e.g., be achieved by providing the contact lens 100 with iris scanning capabilities for biometric identification of the eye, as is disclosed in US 8,798,332 B2. If the contact lens is attached to a different eye, in particular the eye of an authorized user or the eye of a person other than the user, the visual indicator may be activated, or kept in an active state, to indicate to the person wearing the contact lens 100 that he/she is not the legitimate user of the contact lens 100, and/or that the information stored on the contact lens 100 is still protected against unauthorized access.

The contact lens 100 may further be operative to restore the protected information in response to detecting any one of: a transition of the contact lens from the off-eye state to the on-eye state, proximity of a trusted environment (such as the lens case 310), and communications between the contact lens and a trusted communications device (such as the user's smartphone 320). For instance, if the stored information has been erased or reset to a default state, the information may be restored by receiving the information from the trusted communications device, such as the smartphone 320 described in relation to Fig. 3. Alternatively, if the stored information has been encrypted, the information may be restored by decrypting the encrypted information. This may, e.g., be achieved by retrieving a cryptographic key required for decrypting the information from the trusted communications device, e.g., the smartphone 320. As a further alternative, if the stored information is protected by locking the information, e.g., by requiring a token or credential for accessing the stored information which is erased in response to detecting the transition from the on-eye state to the off-eye state, the information may be restored by restoring the token or credential. For instance, the token or credential may be received form the trusted communications device, such as the smartphone 320.

In the following, different alternatives for detecting the transition of the contact lens 100 from the on-eye state to the off-eye state are described.

For instance, the at least one sensor 101 may comprise a shape sensor, and the contact lens 100 is operative to detect the transition from the on-eye state to the off-eye state by detecting a change in shape of the contact lens 100 which is indicative of the contact lens 100 being detached from the eye. The shape sensor 101 may be a stress or strain sensor, or any other sensor capable of detecting changes in the shape of the contact lens 100. This is based on an understanding that the shape of the contact lens 100 adapts to the shape of the eyeball when being attached to an eye (i.e., when being in its on-eye state). The shape of the contact lens 100 in its on-eye state is different from its shape in its off-eye state, i.e., when it is not attached to an eye. If the captured sensor data is indicative of a change in shape exceeding a threshold value, the contact lens 100 determines that a transition of the contact lens 100 from the on-eye state to the off-eye state has occurred.

As an alternative, the at least one sensor 101 may comprise a motion sensor, and the contact lens 100 is operative to detect the transition from the on-eye state to the off-eye state by detecting a characteristic motion of the contact lens 100. The motion sensor 101 may, e.g., comprise accelerometers, earth-magnetic field sensors, etc. While attached to an eye, the motion of the contact lens 100 follows the characteristic motion of the eye. Typically, these are angular motions (excluding any translational motions of the head) within a limited angular range. In contrast, when the contact lens 100 is detached from the eye, e.g., when falling to the ground, its motion is characterized by a translational motion with an acceleration substantially equal to the gravitational acceleration. Alternatively, this may be detected based on motion patterns which are indicative of a detached lens in free fall. In practice, the transition from the on-eye state to the off-eye state may either be detected using a set of thresholds and rules, or using a machine-learning model which is trained for classifying sensor data from the motion sensor 101 into motion which is characteristic for the on-eye state and motion which is characteristic for the transition from the on-eye state to the off-eye state, and/or motion which is characteristic for a lens in free fall.

As a further alternative, the at least one sensor 101 may comprise a thermometer which is arranged to measure a temperature at the concave face of the contact lens 100. The thermometer 101 may, e.g., be provided on or in proximity of the concave face of the contact lens 100 abutting the eye (also referred to as post-lens region). The contact lens 100 is operative to detect the transition from the on-eye state to the off-eye state by detecting a change in temperature at the concave face of the contact lens 100. When attached to the eye, the temperature measured at the concave face of the contact lens 100 is substantially constant and dictated by the temperature of the eye to which the contact lens 100 is attached. When detached from the eye, the temperature fluctuates to larger extent than in the on-eye state, and reflects the (air) temperature of the environment. Detecting the transition from the on-eye state to the off-eye state may be based on the measured temperature change exceeding a threshold value. The contact lens 100 may optionally comprise a second thermometer arranged to measure a temperature at the convex face of the lens, which is the face not facing the eye when the contact lens is attached to an eye (also referred to as pre-lens region). When the contact lens 100 is in its on-eye state, the temperatures measured by the two thermometers are typically different, and the temperature measured by the concave-face thermometer (abutting the eye) is typically more stable. In the off-eye state on the other hand, the temperature readings from the two thermometers are substantially equal since they both measure the same (air) temperature.

As a further alternative, the at least one sensor 101 may comprise a conductivity sensor arranged to measure a conductivity at the concave face of the contact lens 100. The conductivity sensor 101 may, e.g., be provided on or in proximity of the concave face of the contact lens 100 abutting the eye (post-lens region). The contact lens 100 is operative to detect the transition from the on-eye state to the off-eye state by detecting a change in conductivity at the concave face of the contact lens 100. The measured conductivity at the concave face of the contact lens 100 is impacted by the presence of the eye to which the contact lens 100 is attached, owing to the salty fluid wetting the outer surface of the eye (aka tear film). Hence, a change in conductivity is expected when the contact lens 100 is detached from the eye. The detection of the transition from the on-eye state to the off-eye state may, e.g., be based on the change in conductivity exceeding a threshold value.

As a further alternative, the at least one sensor 101 may comprise a humidity sensor arranged to measure a humidity at the concave face of the contact lens 100. The humidity sensor 101 may, e.g., be provided on or in proximity of the concave face of the contact lens 100 abutting the eye (post-lens region). The contact lens 100 is operative to detect the transition from the on-eye state to the off-eye state by detecting a change in humidity at the concave face of the contact lens 100. Similar to the embodiment of the contact lens 100 relying on a change in conductivity to detect the transition from the on-eye state to the off-eye state, the humidity at the concave surface of the contact lens 100 (abutting the eye) is impacted by the presence of the fluid wetting the eye (the tear film) to which the contact lens 100 is attached. Hence, a change in humidity is expected when the contact lens 100 is detached from the eye. The detection of the transition from the on-eye state to the off-eye state may, e.g., be based on the change in humidity exceeding a threshold value.

As a further alternative, the at least one sensor 101 may comprise a pulse sensor, and the contact lens 100 is operative to detect the transition from the on-eye state to the off-eye state in response to the pulse sensor 101 ceasing to detect a pulse during a threshold time duration. The pulse sensor 101 may, e.g., be a pulse oximeter which is disclosed in US 8,909,311 B2. When the contact lens 100 becomes detached from the eye, the pulse sensor 101 ceases to detect a pulse, which is indicative of the transition of the contact lens 100 from the on-eye state to the off-eye state. Since the normal heart rate of a human in rest is between 60 to 100 beats per minute, the threshold can be set to between two and a few seconds.

As a further alternative, the at least one sensor 101 may comprise a pressure sensor arranged to measure a pressure at the concave face of the contact lens 100. The pressure sensor 101 may, e.g., be provided on or in proximity of the concave face of the contact lens 100 abutting the eye (post-lens region). The contact lens 100 is operative to detect the transition from the on-eye state to the off-eye state by detecting a change in pressure at the concave face of the contact lens 100 which is commensurate with the surface tension which the contact lens 100 is subjected to when in the on-eye state. The detection of the transition from the on-eye state to the off-eye state may, e.g., be based on the change in surface tension exceeding a threshold value. In practice, the measured pressure value is expected to drop to substantially zero when the contact lens 100 becomes detached from the eye.

As a further alternative, the at least one sensor 101 may comprise an eye-blink sensor, and the contact lens 100 is operative to detect the transition from the on-eye state to the off-eye state in response to the eye-blink sensor 101 ceasing to detect an eye blink during a threshold time duration. On average, humans blink 15 to 20 times per minute. This means, if no blink has been detected for a duration of, e.g., ten seconds, this is an indication that the contact lens is no longer attached to an eye. Herein, an eye blink is understood to be the closing of the eye lid from an open state to a substantially closed state for a short duration of time, after which the eye lid returns to the open state for a duration of time which is relatively longer than that of the closed state. The eye-blink sensor 101 may, e.g., be based on an optical sensor which detects a change in light intensity when obscured by the closing eye lid.

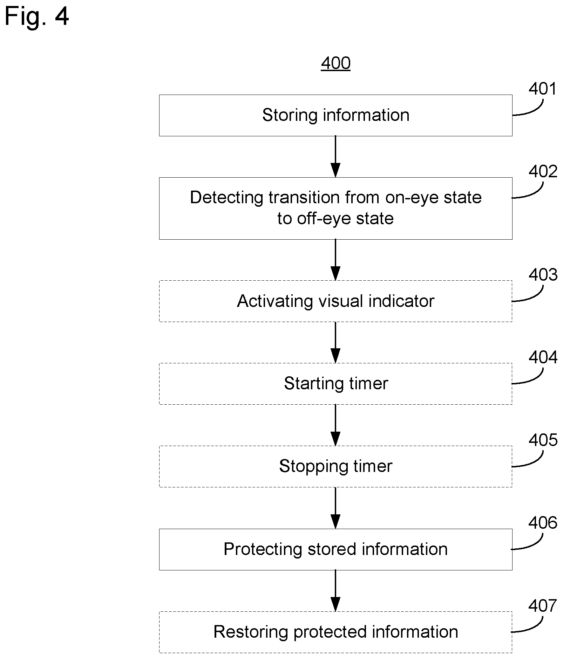

In the following, embodiments of a method 400 a method performed by a contact lens 100 are described with reference to Fig. 4. The method 400 comprises storing 401 information pertaining to a user of the contact lens 100. The method 400 further comprises detecting 402 a transition of the contact lens 100 from an on-eye state to an off-eye state. The transition is detected based on sensor data captured by at least one sensor 101 comprised in the contact lens 101. The at least one sensor 101 is operative to capture sensor data indicative of the transition of the contact lens 100 between the on-eye state and the off-eye state. The method 400 further comprises protecting 406 the stored information against unauthorized access. The stored information is protected in response to detecting the transition from the on-eye state to the off-eye state.

The method 400 may further comprise starting 404 a timer in response to detecting the transition from the on-eye state to the off-eye state, and protecting 406 the stored information against unauthorized access after expiry of the timer. Optionally, the method 400 may further comprise stopping 405 the timer in response to detecting any one of: a transition of the contact lens 100 from the off-eye state to the on-eye state, proximity of a trusted environment (such as the lens case 310), and communications between the contact lens and a trusted communications device (such as the smartphone 320).

The stored information may be protected against unauthorized access by erasing the stored information.

Alternatively, the stored information may be protected against unauthorized access by encrypting the stored information.

Alternatively, the stored information may be protected against unauthorized access by resetting a memory 212 in which the information is stored to a default state.

Alternatively, the stored information may be protected against unauthorized access by restricting access to a memory 212 in which the information is stored.

The method 400 may further comprise protecting 406 the stored information against unauthorized access in response to detecting that a remaining energy of a power source 104 comprised in the contact lens 100 is less than a threshold value.

The method 400 may further comprise activating 403 a visual indicator 105 comprised in the contact lens 100 in response to detecting the transition from the on-eye state to the off-eye state.

The method 400 may further comprise restoring 407 the protected information in response to detecting any one of: a transition of the contact lens 100 from the off-eye state to the on-eye state, proximity of a trusted environment (such as the lens case 310), and communications between the contact lens and a trusted communications device (such as the smartphone 320).

The at least one sensor 101 may comprise a shape sensor, and the transition from the on-eye state to the off-eye state is detected by detecting a change in shape of the contact lens 100 which is indicative of the contact lens 100 being detached from the eye.

The at least one sensor 101 may comprise a motion sensor, and the transition from the on-eye state to the off-eye state is detected by detecting a characteristic motion of the contact lens 100.

The at least one sensor 101 may comprise a thermometer arranged to measure a temperature at the concave face of the contact lens 100, and the transition from the on-eye state to the off-eye state is detected by detecting a change in temperature at the concave face of the contact lens 100.

The at least one sensor 101 may comprise a conductivity sensor arranged to measure a conductivity at the concave face of the contact lens 100, and the transition from the on-eye state to the off-eye state is detected by detecting a change in conductivity at the concave face of the contact lens 100.

The at least one sensor 100 may comprise a humidity sensor arranged to measure a humidity at the concave face of the contact lens 100, and the transition from the on-eye state to the off-eye state is detected by detecting a change in humidity at the concave face of the contact lens 100.

The at least one sensor 101 may comprise a pulse sensor, and the transition from the on-eye state to the off-eye state is detected in response to the pulse sensor ceasing to detect a pulse during a threshold time duration.

The at least one sensor 101 may comprise a pressure sensor arranged to measure a pressure at the concave face of the contact lens 100, and the transition from the on-eye state to the off-eye state is detected by detecting a change in pressure at the concave face of the contact lens 100 which is commensurate with the surface tension which the contact lens 100 is subjected to in the on-eye state.

The at least one sensor 101 may comprise an eye-blink sensor, and the transition from the on-eye state to the off-eye state is detected in response to the eye-blink sensor ceasing to detect an eye blink during a threshold time duration.

It will be appreciated that the method 400 may comprise additional, alternative, or modified, steps in accordance with what is described throughout this disclosure. An embodiment of the method 400 may be implemented as the computer program 213 comprising instructions which, when the computer program 213 is executed by a processor 211 comprised in a contact lens 100 comprising at least one sensor 101 operative to capture sensor data indicative of a transition of the contact lens 100 between an on-eye state and an off-eye state, cause the contact lens 100 to carry out the method 400 and become operative in accordance with embodiments of the invention described herein. The computer program 213 may be stored in a computer-readable data carrier, such as the memory 212. Alternatively, the computer program 213 may be carried by a data carrier signal, e.g., downloaded to the memory 212 via the wireless-interface circuitry 103.

The person skilled in the art realizes that the invention by no means is limited to the embodiments described above. On the contrary, many modifications and variations are possible within the scope of the appended claims.

## Claims

1. A contact lens (100) comprising:
at least one sensor (101) operative to capture sensor data indicative of a transition of the contact lens (100) between an on-eye state and an off-eye state, and
processing circuitry (102) operative to:
store information pertaining to a user of the contact lens (100), and
detect a transition of the contact lens (100) from the on-eye state to the off-eye state, based on sensor data captured by the at least one sensor (101),
the contact lens **characterized in that** the processing circuitry (102) is further operative to:
start a timer in response to detecting the transition from the on-eye state to the off-eye state, and
protect the stored information against unauthorized access after expiry of the timer.

2. The contact lens (100) according to claim 1, the processing circuitry (102) further operative to stop the timer in response to detecting any one of: a transition of the contact lens (100) from the off-eye state to the on-eye state, proximity of a trusted environment (310), and communications between the contact lens (100) and a trusted communications device (320).

3. The contact lens (100) according to any one of claims 1 to 2, the processing circuitry (102) operative to protect the stored information against unauthorized access by erasing the stored information.

4. The contact lens (100) according to any one of claims 1 to 2, the processing circuitry (102) operative to protect the stored information against unauthorized access by encrypting the stored information.

5. The contact lens (100) according to any one of claims 1 to 2, the processing circuitry (102) operative to protect the stored information against unauthorized access by resetting a memory (212) in which the information is stored to a default state.

6. The contact lens (100) according to any one of claims 1 to 2, the processing circuitry (102) operative to protect the stored information against unauthorized access by restricting access to a memory (212) in which the information is stored.

7. The contact lens (100) according to any one of claims 1, 2, 4, and 6, the processing circuitry (102) further operative to restore the protected information in response to detecting any one of: a transition of the contact lens (100) from the off-eye state to the on-eye state, proximity of a trusted environment (310), and communications between the contact lens (100) and a trusted communications device (320).

8. The contact lens (100) according to any one of claims 1 to 7, wherein the at least one sensor (101) comprises a shape sensor, the processing circuitry (102) being operative to detect the transition from the on-eye state to the off-eye state by detecting a change in shape of the contact lens (100) which is indicative of the contact lens (100) being detached from the eye.

9. The contact lens (100) according to any one of claims 1 to 7, wherein the at least one sensor (101) comprises a motion sensor, the processing circuitry (102) being operative to detect the transition from the on-eye state to the off-eye state by detecting a characteristic motion of the contact lens (100).

10. The contact lens (100) according to any one of claims 1 to 7, wherein the at least one sensor (101) comprises a thermometer arranged to measure a temperature at the concave face of the contact lens (100), the processing circuitry (102) being operative to detect the transition from the on-eye state to the off-eye state by detecting a change in temperature at the concave face of the contact lens (100).

11. The contact lens (100) according to any one of claims 1 to 7, wherein the at least one sensor (101) comprises a conductivity sensor arranged to measure a conductivity at the concave face of the contact lens (100), the processing circuitry (102) being operative to detect the transition from the on-eye state to the off-eye state by detecting a change in conductivity at the concave face of the contact lens (100).

12. The contact lens (100) according to any one of claims 1 to 7, wherein the at least one sensor (101) comprises a humidity sensor arranged to measure a humidity at the concave face of the contact lens (100), the processing circuitry (102) being operative to detect the transition from the on-eye state to the off-eye state by detecting a change in humidity at the concave face of the contact lens (100).

13. The contact lens (100) according to any one of claims 1 to 7, wherein the at least one sensor (101) comprises a pulse sensor, the processing circuitry (102) being operative to detect the transition from the on-eye state to the off-eye state in response to the pulse sensor (101) ceasing to detect a pulse during a threshold time duration.

14. The contact lens (100) according to any one of claims 1 to 7, wherein the at least one sensor (101) comprises a pressure sensor arranged to measure a pressure at the concave face of the contact lens (100), the processing circuitry (102) being operative to detect the transition from the on-eye state to the off-eye state by detecting a change in pressure at the concave face of the contact lens (100) which is commensurate with the surface tension which the contact lens (100) is subjected to in the on-eye state.

15. The contact lens (100) according to any one of claims 1 to 7, wherein the at least one sensor (101) comprises an eye-blink sensor, the processing circuitry (102) being operative to detect the transition from the on-eye state to the off-eye state in response to the eye-blink sensor (101) ceasing to detect an eye blink during a threshold time duration.

## Patentansprüche

1. Kontaktlinse (100), umfassend:
mindestens einen Sensor (101), der dazu dient, Sensordaten zu erfassen, die einen Übergang der Kontaktlinse (100) zwischen einem Zustand "auf dem Auge" und einem Zustand "nicht auf dem Auge" angeben, und
Verarbeitungsschaltung (102), die dazu dient:
Informationen über einen Träger der Kontaktlinse (100) zu speichern, und
einen Übergang der Kontaktlinse (100) vom Zustand "auf dem Auge" zum Zustand "nicht auf dem Auge" basierend auf den von dem mindestens einen Sensor (101) erfassten Sensordaten zu erkennen,
wobei die Kontaktlinse **dadurch gekennzeichnet ist, dass** die Verarbeitungsschaltung (102) weiter dazu dient:
einen Timer zu starten, sobald der Übergang vom Zustand "auf dem Auge" zum Zustand "nicht auf dem Auge" erkannt wird, und
die gespeicherten Informationen nach Ablauf des Timers vor unbefugtem Zugriff zu schützen.

2. Kontaktlinse (100) nach Anspruch 1, wobei die Verarbeitungsschaltung (102) weiter dazu dient, den Timer zu stoppen, wenn eines erkannt wird von: einem Übergang der Kontaktlinse (100) vom Zustand "nicht auf dem Auge" zum Zustand "auf dem Auge", der Nähe einer vertrauenswürdigen Umgebung (310) oder Kommunikation zwischen der Kontaktlinse (100) und einer vertrauenswürdigen Kommunikationsvorrichtung (320).

3. Kontaktlinse (100) nach einem der Ansprüche 1 bis 2, wobei die Verarbeitungsschaltung (102) dazu dient, die gespeicherten Informationen durch Löschen der gespeicherten Informationen vor unbefugtem Zugriff zu schützen.

4. Kontaktlinse (100) nach einem der Ansprüche 1 bis 2, wobei die Verarbeitungsschaltung (102) dazu dient, die gespeicherten Informationen durch Verschlüsseln der gespeicherten Informationen vor unbefugtem Zugriff zu schützen.

5. Kontaktlinse (100) nach einem der Ansprüche 1 bis 2, wobei die Verarbeitungsschaltung (102) dazu dient, die gespeicherten Informationen vor unbefugtem Zugriff zu schützen, indem sie einen Speicher (212), in dem die Informationen gespeichert sind, auf einen Standardzustand zurücksetzt.

6. Kontaktlinse (100) nach einem der Ansprüche 1 bis 2, wobei die Verarbeitungsschaltung (102) dazu dient, die gespeicherten Informationen vor unbefugtem Zugriff zu schützen, indem sie den Zugriff auf einen Speicher (212), in dem die Informationen gespeichert sind, einschränkt.

7. Kontaktlinse (100) nach einem der Ansprüche 1, 2, 4 und 6, wobei die Verarbeitungsschaltung (102) weiter dazu dient, die geschützten Informationen wiederherzustellen, wenn eines erkannt wird von: einem Übergang der Kontaktlinse (100) vom Zustand "nicht auf dem Auge" zum Zustand "auf dem Auge", der Nähe einer vertrauenswürdigen Umgebung (310) oder Kommunikation zwischen der Kontaktlinse (100) und einer vertrauenswürdigen Kommunikationsvorrichtung (320).

8. Kontaktlinse (100) nach einem der Ansprüche 1 bis 7, wobei der mindestens eine Sensor (101) einen Formsensor umfasst, wobei die Verarbeitungsschaltung (102) dazu dient, den Übergang vom Zustand "auf dem Auge" zum Zustand "nicht auf dem Auge" durch Erfassen einer Formänderung der Kontaktlinse (100) zu erkennen, die angibt, dass sich die Kontaktlinse (100) vom Auge gelöst hat.

9. Kontaktlinse (100) nach einem der Ansprüche 1 bis 7, wobei der mindestens eine Sensor (101) einen Bewegungssensor umfasst, wobei die Verarbeitungsschaltung (102) dazu dient, den Übergang vom Zustand "auf dem Auge" zum Zustand "nicht auf dem Auge" durch Erfassen einer charakteristischen Bewegung der Kontaktlinse (100) zu erkennen.

10. Kontaktlinse (100) nach einem der Ansprüche 1 bis 7, wobei der mindestens eine Sensor (101) ein Thermometer umfasst, das so angeordnet ist, dass es eine Temperatur an der konkaven Seite der Kontaktlinse (100) misst, wobei die Verarbeitungsschaltung (102) dazu dient, den Übergang vom Zustand "auf dem Auge" zum Zustand "nicht auf dem Auge" durch Erfassen einer Temperaturänderung an der konkaven Seite der Kontaktlinse (100) zu erkennen.

11. Kontaktlinse (100) nach einem der Ansprüche 1 bis 7, wobei der mindestens eine Sensor (101) einen Leitfähigkeitssensor umfasst, der so angeordnet ist, dass er eine Leitfähigkeit an der konkaven Seite der Kontaktlinse (100) misst, wobei die Verarbeitungsschaltung (102) dazu dient, den Übergang vom Zustand "auf dem Auge" zum Zustand "nicht auf dem Auge" durch Erfassen einer Änderung der Leitfähigkeit an der konkaven Seite der Kontaktlinse (100) zu erkennen.

12. Kontaktlinse (100) nach einem der Ansprüche 1 bis 7, wobei der mindestens eine Sensor (101) einen Feuchtigkeitssensor umfasst, der so angeordnet ist, dass er eine Feuchtigkeit an der konkaven Seite der Kontaktlinse (100) misst, wobei die Verarbeitungsschaltung (102) dazu dient, den Übergang vom Zustand "auf dem Auge" zum Zustand "nicht auf dem Auge" durch Erfassen einer Änderung der Feuchtigkeit an der konkaven Seite der Kontaktlinse (100) zu erkennen.

13. Kontaktlinse (100) nach einem der Ansprüche 1 bis 7, wobei der mindestens eine Sensor (101) einen Pulssensor umfasst, wobei die Verarbeitungsschaltung (102) dazu dient, den Übergang vom Zustand "auf dem Auge" zum Zustand "nicht auf dem Auge" zu erkennen, wenn der Pulssensor (101) während einer Schwellenzeitdauer keinen Puls mehr erfasst.

14. Kontaktlinse (100) nach einem der Ansprüche 1 bis 7, wobei der mindestens eine Sensor (101) einen Drucksensor umfasst, der so angeordnet ist, dass er einen Druck an der konkaven Seite der Kontaktlinse (100) misst, wobei die Verarbeitungsschaltung (102) dazu dient, den Übergang vom Zustand "auf dem Auge" zum Zustand "nicht auf dem Auge" durch Erfassen einer Druckänderung an der konkaven Seite der Kontaktlinse (100) zu erkennen, die der Oberflächenspannung entspricht, der die Kontaktlinse (100) im Zustand "auf dem Auge" ausgesetzt ist.

15. Kontaktlinse (100) nach einem der Ansprüche 1 bis 7, wobei der mindestens eine Sensor (101) einen Lidschlagsensor umfasst, wobei die Verarbeitungsschaltung (102) dazu dient, den Übergang vom Zustand "auf dem Auge" zum Zustand "nicht auf dem Auge" zu erkennen, wenn der Lidschlagsensor (101) während einer Schwellenzeitdauer keinen Lidschlag mehr erkennt.

## Revendications

1. Lentille de contact (100) comprenant :
au moins un capteur (101) conçu pour capturer des données de capteur indiquant une transition de la lentille de contact (100) entre un état sur l'œil et un état hors de l'œil, et
un circuit de traitement (102) conçu pour :
stocker des informations relatives à un utilisateur de la lentille de contact (100), et
détecter une transition de la lentille de contact (100) de l'état sur l'œil à l'état hors de l'œil, sur la base des données de capteur capturées par le au moins un capteur (101),
la lentille de contact étant **caractérisée en ce que** le circuit de traitement (102) est en outre conçu pour :
déclencher un minuteur en réponse à la détection de la transition de l'état sur l'œil à l'état hors de l'œil, et
protéger les informations stockées contre tout accès non autorisé après l'expiration du délai.

2. Lentille de contact (100) selon la revendication 1, le circuit de traitement (102) étant en outre conçu pour arrêter le minuteur en réponse à la détection d'un parmi : une transition de la lentille de contact (100) de l'état hors de l'œil à l'état sur œil, une proximité d'un environnement de confiance (310) et des communications entre la lentille de contact (100) et un dispositif de communication de confiance (320).

3. Lentille de contact (100) selon l'une quelconque des revendications 1 à 2, le circuit de traitement (102) étant conçu pour protéger les informations stockées contre l'accès non autorisé en effaçant les informations stockées.

4. Lentille de contact (100) selon l'une quelconque des revendications 1 à 2, le circuit de traitement (102) étant conçu pour protéger les informations stockées contre l'accès non autorisé en chiffrant les informations stockées.

5. Lentille de contact (100) selon l'une quelconque des revendications 1 à 2, le circuit de traitement (102) étant conçu pour protéger les informations stockées contre l'accès non autorisé en réinitialisant une mémoire (212) dans laquelle les informations sont stockées à un état par défaut.

6. Lentille de contact (100) selon l'une quelconque des revendications 1 à 2, le circuit de traitement (102) étant conçu pour protéger les informations stockées contre l'accès non autorisé en limitant l'accès à une mémoire (212) dans laquelle les informations sont stockées.

7. Lentille de contact (100) selon l'une quelconque des revendications 1, 2, 4, et 6, le circuit de traitement (102) étant en outre conçu pour restaurer les informations protégées en réponse à la détection d'un parmi : une transition de la lentille de contact (100) de l'état hors de l'œil à l'état sur l'œil, une proximité d'un environnement de confiance (310) et des communications entre la lentille de contact (100) et un dispositif de communication de confiance (320).

8. Lentille de contact (100) selon l'une quelconque des revendications 1 à 7, dans laquelle le au moins un capteur (101) comprend un capteur de forme, le circuit de traitement (102) étant conçu pour détecter la transition de l'état sur l'œil à l'état hors de l'œil en détectant un changement de forme de la lentille de contact (100) qui indique que la lentille de contact (100) est détachée de l'œil.

9. Lentille de contact (100) selon l'une quelconque des revendications 1 à 7, dans laquelle le au moins un capteur (101) comprend un capteur de mouvement, le circuit de traitement (102) étant conçu pour détecter la transition de l'état sur l'œil à l'état hors de l'œil en détectant un mouvement caractéristique de la lentille de contact (100).

10. Lentille de contact (100) selon l'une quelconque des revendications 1 à 7, dans laquelle le au moins un capteur (101) comprend un thermomètre agencé pour mesurer une température sur la face concave de la lentille de contact (100), le circuit de traitement (102) étant conçu pour détecter la transition de l'état sur l'œil à l'état hors de l'œil en détectant un changement de température sur la face concave de la lentille de contact (100).

11. Lentille de contact (100) selon l'une quelconque des revendications 1 à 7, dans laquelle le au moins un capteur (101) comprend un capteur de conductivité agencé pour mesurer une conductivité sur la face concave de la lentille de contact (100), le circuit de traitement (102) étant conçu pour détecter la transition de l'état sur l'œil à l'état hors de l'œil en détectant un changement de conductivité sur la face concave de la lentille de contact (100).

12. Lentille de contact (100) selon l'une quelconque des revendications 1 à 7, dans laquelle le au moins un capteur (101) comprend un capteur d'humidité agencé pour mesurer l'humidité sur la face concave de la lentille de contact (100), le circuit de traitement (102) étant conçu pour détecter la transition de l'état sur l'œil à l'état hors de l'œil en détectant un changement d'humidité sur la face concave de la lentille de contact (100).

13. Lentille de contact (100) selon l'une quelconque des revendications 1 à 7, dans laquelle le au moins un capteur (101) comprend un capteur d'impulsions, le circuit de traitement (102) étant conçu pour détecter la transition de l'état sur l'œil à l'état hors de l'œil en réponse à l'arrêt de la détection d'une impulsion par le capteur d'impulsions (101) pendant une durée de temps seuil.

14. Lentille de contact (100) selon l'une quelconque des revendications 1 à 7, dans laquelle le au moins un capteur (101) comprend un capteur de pression agencé pour mesurer une pression sur la face concave de la lentille de contact (100), le circuit de traitement (102) étant conçu pour détecter la transition de l'état sur l'œil à l'état hors de l'œil en détectant un changement de pression sur la face concave de la lentille de contact (100) qui est proportionnel à la tension de surface à laquelle la lentille de contact (100) est soumise dans l'état sur l'œil.

15. Lentille de contact (100) selon l'une quelconque des revendications 1 à 7, dans laquelle le au moins un capteur (101) comprend un capteur de clignement d'œil, le circuit de traitement (102) étant conçu pour détecter la transition de l'état sur l'œil à l'état hors de l'œil en réponse à l'arrêt de la détection d'un clignement de l'œil par le capteur de clignement d'œil (101) pendant une durée de temps seuil.
